# EUROPEAN PATENT APPLICATION

(11) **EP 3 333 693 A1**
(43) Date of publication of application: **13.06.2018**
(21) Application number: 17182886.6
(22) Date of filing: 25.07.2017
(51) Int. Cl.: G06F 3/06, G06F 13/38, G06F 11/20

(54) **PORT MODES FOR STORAGE DRIVES**

(30) Priority: 09.12.2016 US 201615374070
(71) Applicant: Hewlett Packard Enterprise Development LP, Houston, TX 77070 (US)
(72) Inventor: TOMASZEWSKI, Richard, Houston, Texas 77070 (US); BUNKER, Michael, Houston, Texas 77070 (US); KALER, Paul, Houston, Texas 77070 (US); BRIGGS, Scott, Houston, Texas 77070 (US)
(74) Representative: ZBM Patents - Zea, Barlocci & Markvardsen

(57) **Abstract**

Examples described herein including receiving a first address from a host controller and receiving a second address from the host controller. The first address may be for a first PHY and the second address may be for a second PHY. Based on the first address and the second address, a port mode for a storage drive associated with the first PHY and the second PHY may be determined.

## Description

### BACKGROUND

A storage drive that is used by an entity in data operations, such as data backup, may have multiple connective interfaces or PHYs through which the drive may communicate with other computing devices, such as a host controller.

### BRIEF DESCRIPTION OF THE DRAWINGS

The following detailed description references the drawings, wherein:
FIG. 1 is a block diagram of a computing device to determine a port mode of a storage drive, according to some examples.
FIG. 2 is a block diagram of a storage drive with a configuration engine to configure the storage drive to a port mode, according to some examples.
FIG. 3 is a flowchart of a method of determining a port mode of a storage drive, according to some examples.
FIG. 4 is a block diagram of a storage drive with two PHYs, according to some examples.
FIG. 5 is a flowchart of a method of determining a port mode of a storage drive with a default mode, according to some examples.

### DETAILED DESCRIPTION

The PHYs of a storage drive may be assigned to logical ports. These logical ports may allow the storage drive to be configured to match the requirements of the host controller and the storage environment in which it is used. For example, in some storage environments, the host controller may require separate fault domains and redundant connections to the storage drive. In these examples, the storage drive may be configured to a dual domain, where each PHY is assigned to a separate logical port. As another example, in other storage environments, the host controller may require increased bandwidth access to the storage drive. In these examples, the storage drive may be configured to a wide port, where a logical port may have many PHYs assigned to it.

In some situations, a storage drive may be configured to a wide port mode or a dual domain mode during manufacture of the storage drive. In other words, the storage drive may be designed to conform to a certain configuration once shipped to the customer. A storage drive that is designed to conform to a certain configuration cannot switch between configurations based on the storage environment it is used in. For example, a storage drive that is designed to be wide port may not be used in a storage environment requiring a dual domain application. These statically configured storage drives are thus not flexible and not adaptable to the changing needs of a host entity.

Examples described herein address these technical challenges by providing a way for a storage drive to configure itself once it is linked to a storage environment. Based on the addresses that are presented to the storage drive, the storage drive may determine a port mode to use and configure the PHYs on the storage drive accordingly. The storage drive may detect the port address presented to the storage drive by a host controller. If the port address presented from the host controller are different for different PHYs, then the storage drive configures itself to dual domain. If the port addresses presented from the host controller are the same for different PHYs, then the storage drive configures itself to wide port. Accordingly, examples disclosed herein provide a way for a storage drive to automatically and dynamically configure itself each time at power on, making the storage rive adaptable to multiple storage environments. Additionally, this may allow for one SKU to be used for both configurations.

In some examples, a computing device is provided with a non-transitory machine-readable storage medium. The non-transitory machine-readable storage medium comprises instructions executable by a processing resource to receive a first address from a host controller. In some examples, the first address is for a first PHY. The storage medium also comprises instructions to receive a second address from the host controller for a second PHY. Additionally, the storage medium includes instructions to determine a port mode for the storage drive associated with the first PHY and the second PHY based on the first address and the second address.

In some examples, a storage drive comprises an address engine, a mode engine, and a configuration engine. The address engine is to receive a first address from a host controller for a first PHY on the storage drive and to receive a second address from the host controller for a second PHY on the storage drive. The mode engine is to determine a port mode for the storage drive based on the first address and the second address. The configuration engine is to configure the storage drive to the port mode.

In some examples, a method is provided, including receiving a first address and a second from a host controller. The first address is for a first PHY on a storage drive and the second address is for a second PHY on the storage drive. The method also includes determining a port mode for the storage drive based on the first address and the second address.

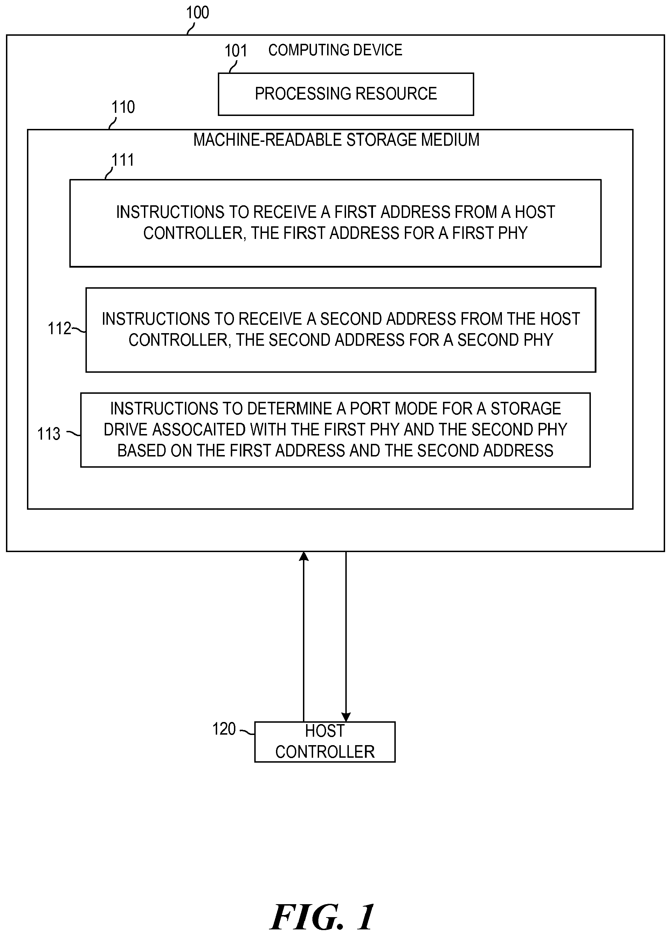

Referring now to the figures, FIG. 1 is a block diagram of a computing device 100 to determine a port mode for a storage drive. As used herein, a "computing device" may be a server, computer networking device, chip set, desktop computer, workstation, or any other processing device or equipment. In some examples, computing device 100 may be a storage drive, such as a hard disk drive (HDD) or a solid state drive (SSD), that communicates with a host controller 120 over a network.

Computing device 100 includes a processing resource 101 and a machine-readable storage medium 110. Machine-readable storage medium 110 may be in the form of non-transitory machine-readable storage medium, such as suitable electronic, magnetic, optical, or other physical storage apparatus to contain or store information such as instructions 111, 112, 113, related data, and the like.

As used herein, "machine-readable storage medium" may include a storage drive (e.g., a hard drive), flash memory, Random Access Memory (RAM), any type of storage disc (e.g., a Compact Disc Read Only Memory (CD-ROM), any other type of compact disc, a DVD, etc.) and the like, or a combination thereof. In some examples, a storage medium may correspond to memory including a main memory, such as a Random Access Memory, where software may reside during runtime, and/or a secondary memory. The secondary memory can, for example, include a nonvolatile memory where a copy of software or other data is stored. In some examples, where computing device 100 is a storage drive, a portion of the machine-readable storage medium may be persistent storage space (e.g., rotating disks or platters paired with magnetic heads and a moving actuator arm in HDDs, integrated circuit assemblies in SSDs) used to store data originating from host clients (e.g., in a data backup process).

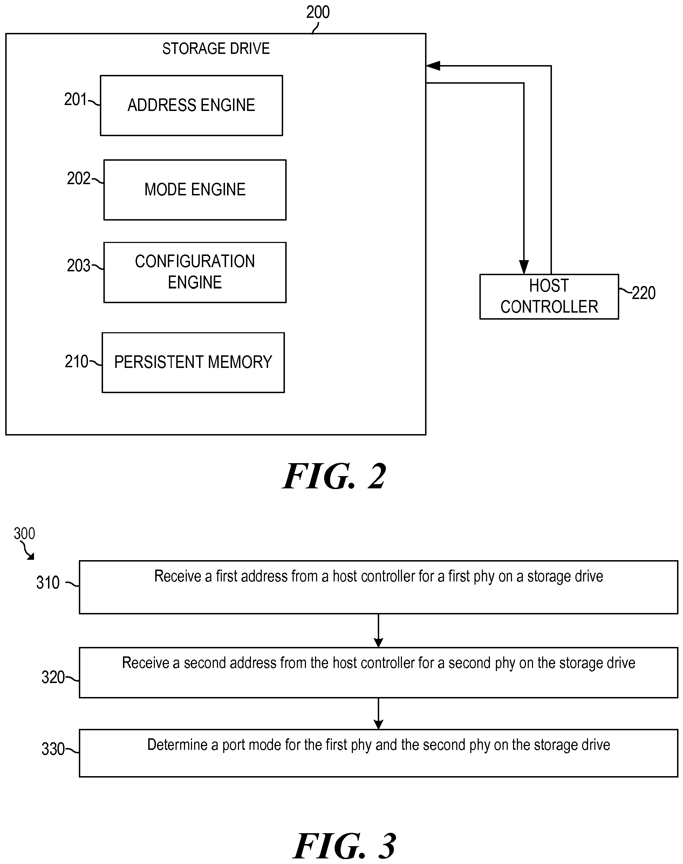

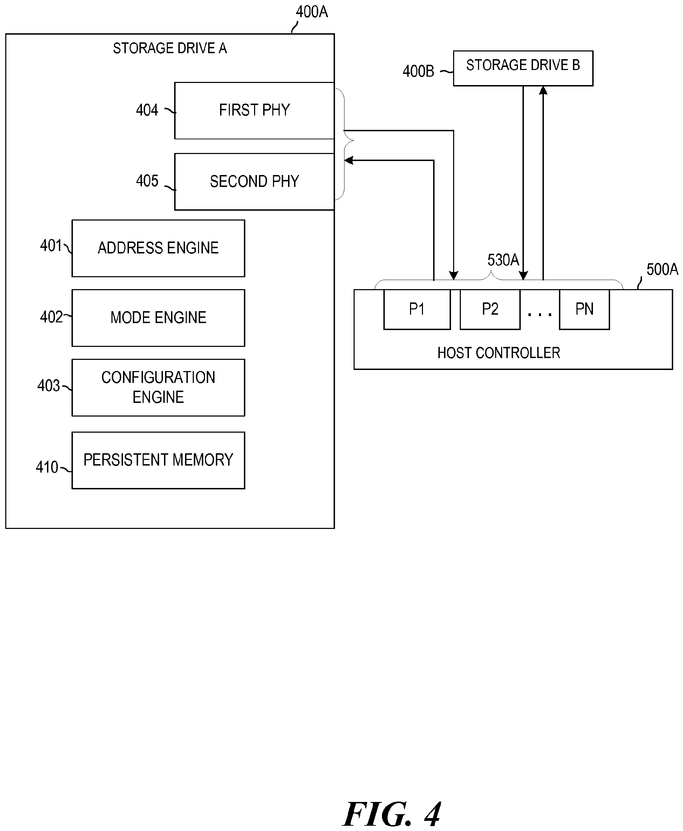

In the example of FIG. 1, instructions 111, 112, and 113 are stored (e.g., encoded) on storage medium 110 and are executable by processing resource 101 to implement functionalities described herein in relation to FIG. 1. In some examples, machine-readable storage medium 110 may include additional instructions, like, for example, the instructions to implement some of the functionalities described in relation to storage drive 200 of FIG. 2 or storage drive 400 of FIG. 4. In some examples, the functionalities of any of the instructions of storage medium 110 may be implemented in the form of electronic circuitry, in the form of executable instructions encoded on machine-readable storage medium, or a combination thereof.

Processing resource 101 may, for example, be in the form of a central processing unit (CPU), a semiconductor-based microprocessor, a digital signal processor (DSP) such as a digital image processing unit, other hardware devices or processing elements suitable to retrieve and execute instructions stored in a storage medium, or suitable combinations thereof. The processing resource can, for example, include single or multiple cores on a chip, multiple cores across multiple chips, multiple cores across multiple devices, or suitable combinations thereof. The processing resource can be functional to fetch, decode, and execute instructions 111, 112, and 113, as described herein.

In some examples, and as shown in FIG. 1, computing device 100 is communicatively coupled to a host controller 120 through a communication network (not shown). In some examples, the communication network may be a wireless network, a wired network, or a combination thereof. In some examples, the communication network may be an individual network or a collection of many such individual networks interconnected with each other and functioning as a single large network (e.g., the Internet or an intranet). In some examples, the communication network may be implemented as a local area network (LAN), wide area network (WAN), etc. In other examples, computing device 100 may be directly coupled to host controller 120. In examples where computing device 100 is a storage drive, computing device 100 may comprise PHYs which include physical interfaces that may physically connect with similar interfaces on host controller 120. Protocols that may be used with these PHYS include but are not limited to Serial Attached SCIS (SAS).

Instructions 111 may be executable by processing resource 101 such that computing device 100 receives an address for a first PHY that is associated with a storage device. Computing device 100 may interface with this storage drive or computing device 100 may be the storage drive with the first PHY. As used herein, a PHY may include a physical layer with circuitry. A PHY may be associated with various protocols, including but not limited to SAS. In examples where a PHY is associated with SAS protocol, a PHY may include a set of four wires that are used as two differential signal pairs. One set transmits in one direction and the other pair transmits in the opposite direction. A PHY on the storage drive may be physically linked to a corresponding PHY located on the host controller 120. Thus, a first PHY on the storage drive may be physically linked to corresponding first PHY on the host controller. The host controller 120 may assign an address to the corresponding PHY that is physically linked to the first PHY on the storage drive. The address received by instructions 111 is from host controller 120 and may be characterized as a "first address." As used herein, an address may comprise alphanumeric characters that uniquely identifies a port in the SAS protocol that comprises the PHY. In some examples, the address may comprise a 64-bit address. In some examples, the address may be a World Wide Name (WWN).

The corresponding PHY in the host controller 120 that is physically linked to the first PHY on the storage drive may be configured to a port on the host controller. The port to which the corresponding PHY is assigned may have a first address. Host controller 120 may transmit this first address to the storage drive in an identification sequence sent to the storage drive. The first PHY on the storage drive may receive this first address. Instructions 111 may allow computing device 100 to receive the first address.

In examples where computing device 100 is the storage drive with the first PHY, computing device 100 may include the first PHY. The first PHY may have a physical layer, a PHY layer, and a link layer. The physical layer may include the physical interface of the first PHY, including the transmitter, receiver, connector, circuitry, etc. The PHY layer may be coupled to the physical layer and may provide for 8b/10b data encoding, ability to translate bits, a clocking mechanism, out-of-band signaling, etc. to communicate and negotiate with the corresponding PHY on the host controller. The link layer may provide for power management, data scrambling, primitive encoding, etc. The first address sent by the corresponding PHY on the host controller that is linked to the first PHY on the storage drive may be received and processed by the different layers of that comprise the first PHY. The SAS protocol may include a port layer above the link layer and at least one transport layer above the port layer. The port layer may coordinate PHYs on the storage drive into logical ports and the transport layer(s) may communicate to layers such as the application layers.

In examples where computing device 100 is the storage drive, instructions 111 may be executable by processing resource 101 such that computing device 100 receives the first address that is sent to the first PHY from the host controller 120. For example, instructions 111 may operate outside the layers in the SAS protocol. Accordingly, instructions 111 may allow processing resource 101 to essentially know the address that is sent to the first PHY from the host controller. In examples where computing device 100 is the storage drive, instructions 112 and 113 may operate at a similar level as instructions 111.

In other examples, computing device 100 is a separate device that interacts and communicates with a storage drive with the first PHY. In these examples, instructions 111 (and instructions 112 and 113) may also operate outside the layers in the SAS protocol of the storage drive and computing device 100 may communicate with the storage drive to receive the first address.

Instructions 112 may be executable by processing resource 101 such that computing device 100 receives a second address from the host controller. The second address may assigned to a second corresponding PHY on the host controller that is physically linked to a second PHY located on the storage drive. Like the first PHY on the storage drive, the second PHY on the storage drive may comprise its own physical layer, PHY layer, and link layer. Additionally, similar to the first address, the second address may comprise alphanumeric characters that uniquely identifies a port in the SAS protocol that comprises the second corresponding PHY on the host controller. The host controller 120 may transmit the second address to the storage drive in an identification sequence sent to the storage drive. The identification sequence may be received and processed by the layers comprising the second PHY on the storage drive. Instructions 112 may allow computing device 100 to receive the second address, similar as discussed above in relation to instructions 111. In examples where the computing device 100 is the storage drive, computing device 100 may comprise the second PHY as well as the first PHY. The first PHY and the second PHY may interact with the same transport layer. Additionally, the first PHY and second PHY may comprise the same logical port depending on the port mode determined by instructions 113, as will be discussed below.

Instructions 113 may be executable by processing resource 101 such that computing device 100 determines a port mode for the first PHY and the second PHY of the storage device based, at least partially, on the first address and the second address. For example, the host controller 120 may present a first address to the first PHY of the storage drive and may present a second address to the second PHY of the storage drive. The first address and the second address may be different from each other. Based on the different addresses, instructions 113 may determine the port mode of the storage drive to be dual domain. In a dual domain port mode, the first PHY of the storage drive is assigned to a different port than the second PHY of the storage drive. A dual domain port mode may be used, for example, to accomplish redundant connections for high availability to the storage drive. As another example, the host controller may present a first address to the first PHY of the storage drive and may present a second address to the second PHY of the storage drive. These addresses may be the same. Based on the similarity of the addresses, instructions 113 may determine the port mode of the storage drive to be wide port. In a wide port mode, the first PHY is assigned to the same port as the second PHY. A wide port mode may be used, for example, for increased bandwidth and high performance.

In some examples, instructions 113 may include instructions executable by processing resource 101 such that computing device 100 configures the storage drive to the determined port mode. In some examples, this includes configuring the first PHY and second PHY so that the first and second PHY present appropriate addresses back to the corresponding PHYS on the host controller 120. For example, instructions 113 may include instructions executable by processing resource 101 such that the first PHY on the storage drive presents a third address to the corresponding PHY on the host controller 120 and the second PHY on the storage drive presents a fourth address to the corresponding PHY on the host controller 120. In examples where instructions 113 determines a wide port mode, the third address and the fourth address may be a common address. In other examples where instructions 113 determines a dual domain port mode, the third address and the fourth address are different from each other.

Computing device 100 of FIG. 1, which is described in terms of processors and machine-readable storage mediums, may include one or more structural or functional aspects of storage drive 200 of FIG. 2 or storage drive 400 of FIG. 4, which are described in terms of functional engines containing hardware and software.

FIG. 2 is a block diagram of a storage drive 200 that is able to self-configure its port mode. As used herein, a storage drive may include a computing device that includes on the device a persistent storage space for the storage of data. For example, a storage drive may be used in the data backup processes of enterprises. Some non-limiting examples of a storage drive are hard disk drives, solid state drives, etc. Storage drive 200 includes address engine 201, mode engine 202, and configuration engine 203. Storage drive 200 also includes persistent memory 210 used for storage of data. Each of these aspects of computing device 200 will be described below. Other engines may be added to storage drive 200 for additional or alternative functionality.

Each of engines 201, 202, 203, and any other engines, may be any combination of hardware (e.g., a processor such as an integrated circuit or other circuitry) and software (e.g., machine or processor-executable instructions, commands, or code such as firmware, programming, or object code) to implement the functionalities of the respective engine. Such combinations of hardware and programming may be implemented in a number of different ways. A combination of hardware and software can include hardware (i.e., a hardware element with no software elements), software hosted at hardware (e.g., software that is stored at a memory and executed or interpreted at a processor), or at hardware and software hosted at hardware. Additionally, as used herein, the singular forms "a," "an," and "the" include plural referents unless the context clearly dictates otherwise. Thus, for example, the term "engine" is intended to mean at least one engine or a combination of engines. In some examples, storage drive 200 may include additional engines.

Each engine of storage drive 200 can include at least one machine-readable storage mediums (for example, more than one) and at least one processing resource (for example, more than one). For example, software that provides the functionality of engines on storage drive 200 can be stored on a memory of a computer to be executed by a processing resource of the computer. In some examples, each engines of storage drive 200 may include hardware in the form of a microprocessor on a single integrated circuit, related firmware, or other software for allowing microprocessor to operatively communicate with other hardware of computing device 200.

Address engine 201 is an engine of storage drive 200 that includes a combination of hardware and software that allows storage drive 200 to receive a first address from a host controller 220. The first address may be assigned to a PHY on host controller 220 and the first address may uniquely identify a SAS port that the PHY on the host controller 220 is assigned to. "Address" and "PHY", as described above in relation to computing device 100, are applicable here. The PHY on the host controller 220 that has been assigned the first address may be physically linked to a first PHY on storage drive 200 (not shown in FIG. 2). In some examples, the corresponding PHY on the host controller may present the first address to the first PHY on storage drive 200. The first PHY may receive the first address. Address engine 201 may then receive the first address from the first PHY. In other words, in some examples, address engine 201 may operate at a level that is higher than the SAS protocol level of the PHY. In these examples, address engine 201 may be in the form of software hosted at hardware. In other examples, address engine 201 may operate at the SAS protocol levels (e.g., it is part of the PHY layer that receives the first address from host controller 220). In these examples, address engine 201 may be in the form of hardware and/or hardware and software hosted at hardware.

Address engine 201 also allows storage drive 200 to receive a second address from host controller 220. This address is characterized as a "second" address to differentiate this address from the first address discussed above. The use of "second" may or not may not correspond to the order in which address engine 201 receives the second address in relation to the first address. The second address may be assigned to a PHY on host controller 220. The PHY with the second address on host controller 220 is a different PHY than the PHY that is assigned the first address, as discussed above. The second address may uniquely identify a SAS port that the PHY is assigned to. This PHY on host controller 220 may present the second address to a second PHY (not shown in FIG. 2) on the storage drive to which the PHY on the host controller is physically linked to.

Mode engine 202 is an engine of storage drive 200 that includes a combination of hardware and software that allows storage drive 200 to determine a port mode for the storage drive based, at least partially on, the first address and the second address received by address engine 201. In some examples, the first address and the second address may be different. The different addresses may indicate that host controller 220 requires a storage drive that allows for dual domain due to certain application requirements. Mode engine 202 may determine the port mode for storage drive 200 to be dual domain because of the different addresses. In other examples, the first address and the second address may be the same. The similar addresses may indicate that host controller 220 requires a storage drive that allows for wide port due to bandwidth requirements of specific applications. Mode engine 202 may determine the port mode for storage drive 200 to be wide port because of the similar addresses. Accordingly, mode engine 202 allows storage drive 200 to determine a port mode to configure itself to, based on the linked host controller 220.

As discussed above, in some examples, address engine 201 may be implemented within the SAS protocol, for example, at the PHY level. As also discussed above, in other examples, address engine 201 may be implemented outside the SAS protocol. These examples are also applicable to mode engine 202. In some examples, mode engine 202 may be implemented within the SAS protocol. In these examples, mode engine 202 may be in the form of hardware and/or hardware and software hosted at hardware. In other examples, mode engine 202 may be implemented outside (at a level higher) than the SAS protocol. In these examples, mode engine 202 may be in the form of software hosted at hardware. In some examples, mode engine 202 and address engine 201 may be both be implemented outside the SAS protocol or within the SAS protocol.

Configuration engine 203 is an engine of storage drive 200 that includes a combination of hardware and software that allows storage drive to configure the storage drive to the port mode that is determined by engine 202. This may include configuring the first PHY and the second PHY so that they are associated with appropriate SAS ports for the determined port mode. For example, in situations where the determined port mode is dual domain, configuration engine 203 may assign to first PHY and the second PHY on the storage drive addresses that are different from each other. In situations where the determined port mode is wide port, configuration engine 203 may assign to the first PHY and to the second PHY on the storage drive addresses that are the same. The address assigned to the second PHY may be characterized as a "third" address and the address assigned to the third PHY may be characterized as a "fourth" address. As discussed above, in some examples, address engine 201 and/or mode engine 202 may be implemented within the SAS protocol, for example, at the PHY level and in other examples, address engine 201 and/or mode engine 202 may be implemented outside the SAS protocol. This is also applicable to configuration engine 203. In some examples, configuration engine 203 may be implemented within the SAS protocol. In these examples, configuration engine 203 may be in the form of hardware and/or hardware and software hosted at hardware. In other examples, configuration engine 203 may be implemented outside (at a level higher) than the SAS protocol. In these examples, configuration engine 203 may be in the form of software hosted at hardware. In some examples, configuration engine 203, mode engine 202, and address engine 201 may be all implemented outside the SAS protocol or within the SAS protocol.

In some examples, storage drive 200 may not have a default mode at power on of the storage drive. In other examples, storage drive 200 may have a default mode at power on of the storage drive. As used herein, a default mode is a port mode configuration of the storage drive 200 that is pre-set at manufacturing of the storage drive. For example, storage drive 200 may be designed such that at power on of storage drive 200, the storage drive 200 has a default mode of dual domain. This is when the first PHY and the second PHY of the storage drive have different pre-assigned addresses and thus are assigned to different SAS ports. As another example, storage drive 200 may be designed such that at power on, the storage drive 200 has a default mode of wide port. This is when the first PHY and the second PHY have the same pre-assigned address. The default mode (and the pre-assigned addresses) are set before any interaction with a linked host controller. In examples where storage drive 200 has a default mode, storage drive 200 may change its default mode to a determined port mode. Thus, upon physically linking with host controller 220, address engine 201 may receive the addresses presented by the host controller and mode engine 202 may determine an appropriate port mode for the storage drive 200 to be used with the host controller 220. Configuration engine 203 may determine whether the default mode is similar to the determined port mode. In examples where the default mode is different than the determined port mode, configuration engine 203 may reset storage drive 200 and reconfigure storage drive 200 to the determined port mode.

In some examples with a default mode, storage drive 200 may have a default mode of dual domain. Upon linking to host controller 220, address engine 201 may receive a first address and a second address, the first address presented to the first PHY on storage drive 200 and the second address presented to the second PHY on storage drive 200. In some examples, the first address and the second address may be the same. Based on the similar addresses, mode engine 202 may determine a port mode for storage drive 200 as wide port. Accordingly, configuration engine 203 may determine that storage drive 200 needs to be reconfigured from the default mode of dual domain to the port mode of wide port. In some examples, the reconfiguration of the storage drive includes assigning a new address to the first PHY on the storage drive and/or assigning a new address to the second PHY on the storage drive that are different from the pre-assigned addresses at power-on. Additionally, reconfiguration may also include resetting the first PHY and/or the second PHY. In resetting the first PHY and/or the second PHY, the first PHY and/or the second PHY may present (or transmit) their new addresses to the corresponding connected PHYs on the host controller. In some examples, a new address may be assigned to the second PHY on the storage drive only (i.e. the address pre-assigned to the first PHY is kept the same). For example, to reconfigure from the default mode of dual domain to the port mode of wide port, the second PHY on the storage drive may be assigned an address that is similar to the address that was pre-assigned to the first PHY on the storage drive. Thus, in examples where the second PHY is assigned a new address and the first PHY keeps its pre-assigned address, the address that is assigned to the second PHY may be characterized as a third address. In examples where the first PHY and the second PHY are both assigned new addresses, the address that is assigned to the first PHY may be characterized as a third address and the address that is assigned to the second PHY may be characterized as a fourth address.

In other examples, the first address and the second address may be different. Based on the different addresses, mode engine 202 may determine a port mode for storage drive 200 as dual domain. Accordingly, configuration engine 203 may determine that storage drive 200 does not need to be reconfigured from the default mode.

In other examples with a default mode, storage drive 200 may have a default mode of wide port. Upon linking to host controller 220, address engine 201 may receive a first address and a second address, the first address presented to the first PHY on storage drive 200 and the second address presented to the second PHY on storage drive 200. In some examples, the first address and the second address may be the same. Based on the similar addresses, mode engine 202 may determine a port mode for storage drive 200 as wide port. Accordingly, configuration engine 203 may determine that storage drive 200 does not need to be reconfigured from the default mode of wide port. In other examples, the first address and the second address may be different. Based on the different addresses, mode engine 202 may determine a port mode for storage drive 200 as dual domain. Accordingly, configuration engine 203 may determine that storage drive 200 needs to be reconfigured from the default mode of wide port to the port mode of dual domain.

Accordingly, storage drive 200 is capable of determining a port mode upon the linking of a host controller. In other words, it may determine a port mode and configure itself dynamically based on what the host controller requires and the storage environment in which the storage drive is placed. Storage drive 200 may also reconfigure itself from a default mode. Thus, storage drive 200 is adaptable to varying storage environments and requirements because it may be used in instances when a dual domain is required and in instances when a wide port is required.

Storage drive 200 of FIG. 2, which is described in terms of functional engines containing hardware and software, may include may include one or more structural or functional aspects of computing device 100 of FIG. 1 or storage drive 400 of FIG. 4.

FIG. 3 illustrates a flowchart for an example method 300 to determine a port mode of a storage drive. Although execution of method 300 is described below with reference to computing device 100 of FIG. 1, other suitable systems for execution of method 300 may be utilized (e.g., storage drive 200 or storage drive 400). Additionally, implementation of method 300 is not limited to such examples and method 300 may be used for any suitable device or system described herein or otherwise.

At 310 of method 300, processing resource 101 may execute instructions 111 to receive a first address from a host controller for a first PHY on a storage drive. As discussed above, the first address may be assigned to a corresponding PHY on host controller 120 where the corresponding PHY is linked to the first PHY on the storage drive. As discussed above, the first address may be a World Wide Name (WWN) address. At 320 of method 300, processing resource 101 may execute instructions 112 to receive a second address from the host controller for a second PHY on the storage drive. The second address may be assigned to a corresponding PHY on host controller 120 where the corresponding PHY is linked to the second PHY on the storage drive. Second address may also be a WWN address. At 330 of method 300, processing resource 101 may execute instructions 113 to determine a port mode for the first PHY and the second PHY on the storage drive. As discussed above, the port mode may be determined based, at least on, the similarity or difference of the first address and the second address. A first address that is similar to a second address will lead to a port mode determination of wide port. A first address that is different to the second address will lead to a port mode determination of dual domain. Although the flowchart of FIG. 3 shows certain functionalities as occurring in one step, the functionalities of one step may be completed in at least one step (e.g., in multiple steps).

FIG. 4 is a block diagram of a host controller 500A interfacing with storage drive 400A and storage drive 400B. Host controller 500A may include a number of PHYs- P1, P2 to PN, collectively referred to 530A. Host controller 500A may be a computing device that manages access to the persistent memory for the data backup in the host entity. In some examples, host controller 500A may have four PHYs. Host controller 500A may also interface with a host computing device (not shown in FIG. 4), where the data to be stored on storage drives 400A and 400B originates. Two PHYs may physically link to storage drive 400A and two PHYs may physically link to storage drive 400B. Thus, in this example, host controller 500A may direct data originating from connected host computing devices to be stored on the persistent memory in storage drives 400A and/or 400B. Host controller 500A is not limited to four PHYs however, and may have a different number of PHYs. Additionally, host controller 500A may link to more or less storage drives than the number shown in FIG. 4.

Storage drive 400A includes address engine 401, mode engine 402, configuration engine 403, and persistent memory 410. Storage drive 400A may also include first PHY 404 and second PHY 405. First PHY 404 and second PHY 405 may include the layers as discussed above in relation to computing device 100 of FIG. 1.

Address engine 401 has similar functionalities to address engine 201 as described above in relation to storage drive 200. Mode engine 402 has similar functionalities to mode engine 202 as described above in relation to storage drive 200. Configuration engine 403 has similar functionalities to configuration engine 203 and persistent memory 410 is similar to persistent memory 210 as described above as described above in relation to storage drive 200. As discussed above, in some examples, in storage drive 200, address engine 201, mode engine 202, and configuration engine 203 may be implemented within the SAS protocol layers, or may be implemented outside of the SAS protocol layers. In comparison to storage drive 200, in storage drive 400A, address engine 401, mode engine 402, and configuration engine 403 are implemented above the SAS protocol layers, including the layers in the first PHY and second PHY. Accordingly, in the storage drive 400A shown in FIG. 4, address engine 401, mode engine 402, and configuration engine 403 may be in the form of software hosted at hardware (e.g. software stored in secondary memory that may be processed by a processing resource). Accordingly, address engine 401, mode engine 402, and configuration engine 403 may all interact with first PHY 404 and second PHY 405. In other examples, and not shown in FIG. 4, address engine 401, mode engine 402, and configuration engine 403 may be implemented in the SAS protocol layers. In these examples, address engine 401, mode engine 402, and configuration engine 403 may take the form of hardware and/or hardware and software hosted at hardware.

While storage drive 400A is shown in FIG. 4 as having two PHYs, storage drive 400A is not limited to the number of PHYs shown. For example, storage drive 400A may have four PHYs, five PHYs, six PHYs, etc. In examples where storage drive 400A has more PHYs than what is shown in FIG. 4, address engine 401, mode engine 402, and configuration engine 403 may interact with the additional PHYs in the same manner as described above in relation to the first PHY and the second PHY to determine a port mode for storage drive 400A. In these examples, the port mode may be dual domain, where each domain is comprised of a wide port. This may occur when there are a total of four PHYs on the storage drive, and two of the PHYs receive the same address from their corresponding PHYs on the host controller while the other two PHYs each receive an address that is similar to each other but is different from the first addresses sent to the other two PHYs. In these examples, the port mode may also be tri-domain (where two PHYs are presented with the same address and the remaining two PHYs have different addresses), or quad domain (where all four PHYs are presented with different addresses). Accordingly, in these examples, a wide port may be determined when at least two PHYs (e.g., two PHYs, three PHYs, four PHYs) are presented with a common address.

Storage drive B 400B may be similar to storage drive A 400A. Details of storage drive 400B are not shown for clarity.

Storage drive 400A of FIG. 4, which is described in terms of functional engines containing hardware and software, may include one or more structural or functional aspects of computing device 100 of FIG. 1, which is described in terms of processors and machine-readable storage mediums. Storage drive 400 of FIG. 4, may include one or more structural or functional aspects of storage drive 200 of FIG. 2.

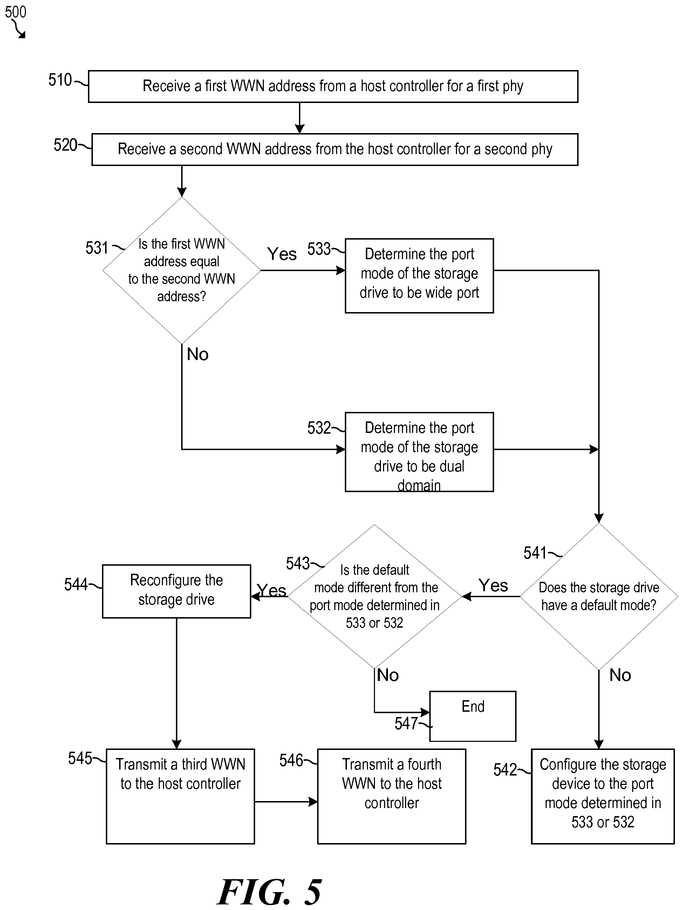

FIG. 5 illustrates a flowchart for an example method 500 to configure a storage drive with a default mode. Although execution of method 500 is described below with reference to storage drive 200 of FIG. 2, other suitable systems for execution of method 500 may be utilized (e.g., computing device 100 or storage drive 400). Additionally, implementation of method 500 is not limited to such examples, and method 500 may be used for any suitable device or system described herein or otherwise.

At 510 of method 500, address engine 201 of storage drive 200 may receive a first address from host controller 220 for a first PHY on storage drive 200. In some examples, the address may be a WWN address. The first address may be assigned to a corresponding PHY on host controller 220 that is linked to the first PHY on storage drive 200. At 520 of method 500, address engine 201 of storage drive 200 may receive a second address from host controller 220 for a second PHY on storage drive 200. In some examples, the address may be a WWN address. The second address may be assigned to a corresponding PHY on host controller 220 that is linked to the second PHY on storage rive 200. The corresponding PHY on host controller 220 for the first PHY is different than the corresponding PHY on host controller for the second PHY.

At 531 of method 500, mode engine 202 of storage drive 200 may compare the first address to the second address to determine if the first address is equal to the second address. In response to a determination that the first address is equal to the second address, method 500 moves to 533. At 533, mode engine 202 determines the port mode of storage drive 200 to be wide port. From 533, method 500 moves to 541.

In response to a determination that the first address is not equal to the second address at 531, method 500 moves to 532. At 532, mode engine 202 determines the port mode of storage drive to be dual domain. From 532, method 500 moves to 541.

At 541, configuration engine 203 determines if the storage drive has a default mode. In response to a determination that the storage drive does not have a default mode, method moves to 542. At 542, configuration engine 203 configures the storage drive to the port mode that is determined in either 532 or 533 of method 500. As discussed above, this may be accomplished by assigning a third address to the first PHY and a fourth address to the second PHY.

In response to a determination that the storage drive does have a default mode at 541, method moves to 543. At 543, configuration engine 203 determines if the default mode of the storage drive is different from the port mode determined in 532 or 533. In response to a determination that the default mode is the same as the port mode, method moves to 547, where method 500 ends. In this example, configuration engine 203 does not need to reconfigure the storage drive. In response to a determination that the default mode is different from the port mode, method moves to 544. At 544, configuration engine 203 reconfigures the storage drive 544 to the port mode. This is done so that storage drive 200 is appropriately configured to interact with and meet the storage needs of linked host controller 220. Configuration engine 203 may reconfigure storage drive 200 by changing the address associated to the first PHY on storage drive and the address associated to the second PHY on the storage drive. Because storage drive 200 has a default mode, the first PHY of storage drive 200 will already be assigned to a port with an address. Additionally, the second PHY of the storage drive 200 will also already be assigned to a port with an address. Configuration engine 203 may change the address assigned to the first PHY to a third address and the address assigned to the second PHY to a fourth address. In some examples, the third address and the fourth address are equal to each other. This reconfigures the storage drive 200 from a default port of dual domain to a port mode of wide port. In other examples, configuration engine 203 may change the third address and the fourth address such that they are different from each other. This reconfigures the storage drive 200 from a default port of wide port to a port mode of dual domain. In some examples, the third and fourth addresses may be WWN addresses.

At 545, the first PHY on storage drive 200 may transmit the third address to host controller 220 to present it to host controller 220. At 546, the second PHY on storage drive 200 may transmit the fourth address to host controller 220 to present it to host controller 220. The presentation of these addresses to the host controller 220 (and more specifically the corresponding PHYs on the host controller 220) may allow host controller 220 to know that storage drive 200 is configured to the correct port mode. As discussed above, in some examples not shown in FIG. 5, the address of the first PHY is kept the same as its pre-assigned address, and the address of the second PHY is changed to either match the pre-assigned address of the first PHY or changed to be different from the pre-assigned address of the first PHY. In these examples, method 500 would not perform 546.

Although the flowchart of FIG. 5 shows certain functionalities as occurring in one step, the functionalities of one step may be completed in at least one step (e.g., in multiple steps). Additionally, in some examples, functionalities described herein in relation to FIG. 5 may be provided in combination with functionalities described herein in relation to any of FIGS. 1-4.

In one example according to the present disclosure, there is provided a non-transitory machine-readable storage medium comprising instructions that, when executed, cause a processing resource to receive a first address from a host controller, the first address for a first PHY, receive a second address from the host controller, the second address for a second PHY and determine a port mode for a storage drive associated with the first PHY and the second PHY based on the first address and the second address.

In one example according to the present disclosure there is provided a storage drive comprising: an address engine to receive a first address from a host controller for a first PHY on the storage drive, receive a second address from the host controller for a second PHY on the storage drive; and a mode engine to determine a port mode for the storage drive based on the first address and the second address.

The storage drive may comprise the first PHY and the second PHY. The storage drive may for example comprise a solid state drive or a hard disk drive.

In one example according to the present disclosure, there is provided a method comprising receiving a first address from a host controller for a first PHY on a storage drive; receiving a second address from the host controller for a second PHY on the storage drive; and determining a port mode for the storage drive based on the first address and the second address.

In one example, the first address is similar to the second address and the port mode is a wide port. In another example, the first address is different than the second address and the port mode is a dual domain.

All of the features disclosed in this specification (including any accompanying claims, abstract and drawings), and/or all of the elements of any method or process so disclosed, may be combined in any combination, except combinations where at least some of such features and/or elements are mutually exclusive.

## Claims

1. A non-transitory machine-readable storage medium comprising instructions that, when executed, cause a processing resource to:
receive a first address from a host controller, the first address for a first PHY;
receive a second address from the host controller, the second address for a second PHY; and
determine a port mode for a storage drive associated with the first PHY and the second PHY based on the first address and the second address.

2. The non-transitory machine-readable storage medium of claim 1,
wherein the first address is equal to the second address; and
wherein the port mode is a wide port.

3. The non-transitory machine-readable storage medium of claim 1,
wherein the first address is different from the second address; and
wherein the port mode is a dual domain.

4. The non-transitory machine-readable storage medium of claim 1,
wherein the first address comprises a World Wide Name (WWN) address.

5. The non-transitory machine-readable storage medium of claim 1, comprising instructions that, when executed, cause the processing resource to:
configure the storage drive to the port mode.

6. The non-transitory machine-readable storage medium of claim 1, comprising instructions that, when executed, cause the processing resource to:
reconfigure the storage drive from a default mode to the port mode.

7. The non-transitory machine-readable storage medium of claim 6, wherein the instructions to reconfigure the storage drive from the default mode to the port mode comprises instructions to:
assign a third address to the first PHY; and
assign a fourth address to the second PHY.

8. A storage drive comprising:
an address engine to:
receive a first address from a host controller for a first PHY on the storage drive;
receive a second address from the host controller for a second PHY on the storage drive;
a mode engine to determine a port mode for the storage drive based on the first address and the second address.

9. The storage drive of claim 8 further comprising a configuration engine to configure the storage drive to the port mode.

10. The storage drive of claim 8,
wherein the first address is similar to the second address; and
wherein the port mode is a wide port.

11. The storage drive of claim 8,
wherein the first address is different from the second address; and
wherein the port mode is a dual domain.

12. The storage drive of claim 9,
wherein the configuration engine is to assign a third address to the first PHY and to assign a fourth address to the second PHY, wherein the third address and the fourth address are the same.

13. The storage drive of claim 9,
wherein the configuration engine is to assign a third address to the first PHY and to assign a fourth address to the second PHY, wherein the third address and the fourth address are different.

14. A method comprising:
receiving a first address from a host controller for a first PHY on a storage drive;
receiving a second address from the host controller for a second PHY on the storage drive; and
determining a port mode for the storage drive based on the first address and the second address.

15. The method of claim 14, comprising:
reconfiguring the storage drive from a default mode to the port mode;
transmitting a third address to the host controller for the second PHY on the storage drive.
